(19) Europäisches Patentamt / European Patent Office / Office européen des brevets

(11) **EP 3 858 108 B1**

(12) **EUROPÄISCHE PATENTSCHRIFT**

(45) Veröffentlichungstag und Bekanntmachung des Hinweises auf die Patenterteilung:
**27.04.2022   Patentblatt 2022/17**

(21) Anmeldenummer: **19765224.1**

(22) Anmeldetag: **04.09.2019**

(51) Internationale Patentklassifikation (IPC):
**H05B 7/18** (2006.01)    **C21C 5/52** (2006.01)
**F27D 11/08** (2006.01)    **F27B 3/08** (2006.01)
**F27B 3/28** (2006.01)

(52) Gemeinsame Patentklassifikation (CPC):
**H05B 7/18; C21C 5/527; F27B 3/085; F27B 3/28;**
C21C 2005/5288; C21C 2300/06; Y02P 10/20;
Y02P 10/25

(86) Internationale Anmeldenummer:
**PCT/EP2019/073501**

(87) Internationale Veröffentlichungsnummer:
**WO 2020/064280 (02.04.2020 Gazette 2020/14)**

(54) **VERFAHREN ZUM BETREIBEN EINES ELEKTROLICHTBOGENOFENS**

METHOD FOR OPERATING AN ELECTRIC ARC FURNACE

PROCÉDÉ DE FONCTIONNEMENT D'UN FOUR À ARC ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2018   DE 102018216539**

(43) Veröffentlichungstag der Anmeldung:
**04.08.2021   Patentblatt 2021/31**

(73) Patentinhaber: **SMS Group GmbH**
**40237 Düsseldorf (DE)**

(72) Erfinder:
• **PASCH, Thomas**
**40699 Erkrath (DE)**
• **OTERDOOM, Harmen Johannes**
**40219 Düsseldorf (DE)**
• **GÖCOGLU, Mesut**
**47058 Duisburg (DE)**
• **NÖRTHEMANN, Ralf**
**45549 Sprockhövel (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**DE-A1- 2 351 171        DE-A1- 3 543 773**
**DE-A1-102004 046 728    DE-B1- 1 533 922**

## Beschreibung

Gebiet der Erfindung

Die Erfindung betrifft ein Verfahren zum Betreiben eines Elektrolichtbogenofens, insbesondere eines Elektroreduktionsofens. Elektrolichtbogenöfen, insbesondere Elektroreduktionsöfen dienen dazu, Einsatzmaterialien, wie z.B. FeCr, TiO2, FeNi, DRI, etc. in offenen oder geschlossenen Ofengefäßen mit teilweise frei brennbaren Lichtbögen (Open-Bath Prozesse) einzuschmelzen und zu reduzieren.

Stand der Technik

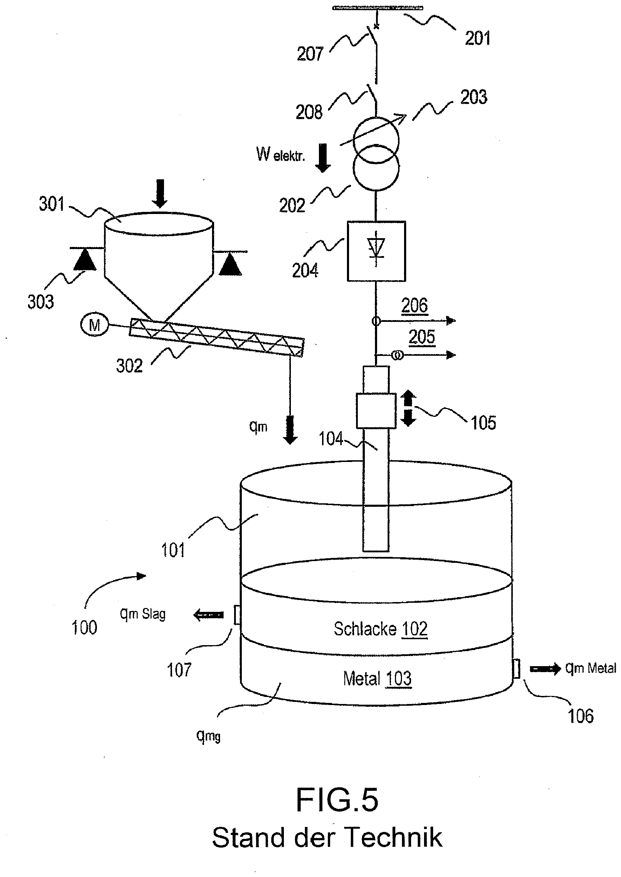

Fig. 5 veranschaulicht ein aus dem Stand der Technik bekanntes Verfahren zum Betreiben eines Elektrolichtbogenofens 100.

Nachdem der Trennschalter (208) und der Leistungsschalter (207) geschlossen wurden, wird die elektrische Energie ($W_{elektr.}$) von einer Energieversorgungsschiene (201) über mindestens eine Elektrode (104) dem Lichtbogenofen (100) zugeführt. Mindestens ein Ofentransformator (202) dient dazu die primärseitige Netzspannung auf eine für den Ofenbetrieb erforderliche Sekundärspannung herunter zu transformieren. Ein Stufenschalter (203) kann hierbei die Sekundärspannung stufig einstellen. Vorzugsweise ist mindestens ein zwischen der Energieversorgungschiene und der Elektrode geschalteter leistungselektronischer Stromrichter (204) vorgesehen, welcher die Spannung (205) in einer vorteilhaften Ausführung stufenlos einstellen kann.

Hierbei ist es unerheblich, ob sich der Stromrichter (204) in Form eines Wechselstromstellers oder Gleichrichters auf der Sekundärseite des Ofentransformators befindet oder in Form eines Wechselstromstellers oder einer variablen Drosselspule auf der Primärseite des Ofentransformators (202). Auch ist die Anordnung und Anzahl der Elektroden (104) ist unerheblich. Üblicherweise, aber nicht zwingend, werden jedoch bei Gleichstromöfen eine oder zwei Elektroden als Kathode verwendet, bzw. 3 oder 6 Elektroden bei Drehstromöfen. Mittels einer Elektrodenpositions-Verstellung (105) können die Elektroden vertikal in der Höhe verstellt werden, wodurch Einfluss auf die Lichtbogenlänge und damit auf den Lichtbogenwiderstand genommen werden kann. Entsprechend des Ohmschen Gesetzes fließt beim Anlegen einer Spannung ein elektrischer Strom, der durch den Badwiderstand und die Reaktanz des Ofensystems begrenzt wird. Spannung und Strom können mittels Spannungsmessung (205) und Strommessung (206) für jede Elektrode gemessen werden. Die in Ofengefäß (101) pro Elektrode (104) eingebrachte Leistung ergibt sich aus der Beziehung

$$P = R * I^2 \hspace{4cm} (1)$$

Über eine Material-Fördereinrichtung (302) wird Material aus mindestens einem vorgelagerten Ofenbunker (301) einem Ofengefäß (101) zugeführt. Die Menge und damit der Massenstrom $q_m$ können mittels einer Gewichtserfassung (303) gemessen bzw. bestimmt werden.

Das Material wird durch die zugeführte elektrische Energie, die innerhalb des Ofengefäßes in thermische Energie umgewandelt wird, aufgeschmolzen. Es sammelt sich flüssiges Metall (103) und flüssige Schlacke (102) innerhalb des Ofengefäßes (101). In zyklischen Abständen kann heißes Metall und heiße Schlacke durch dafür vorgesehene Metall- und Schlacken-Abstichlöcher (106; 107) aus dem Ofengefäß abgelassen werden.

Schon kleine Ungenauigkeiten bei der Energie- und Massenbilanz (404) innerhalb des Ofengefäßes (101) führen zu Instabilitäten im Produktionsprozess und die Temperatur von Schlacke (102) und Metall (103) weichen von der idealen Solltemperatur ab.

Wenn die eingebrachte Energie im Verhältnis zur eingebrachten Materialmenge zu gering ist, wird das eingebrachte Material nicht optimal aufgeschmolzen; das sich im Ofengefäß (101) befindliche Metall (103) und die Schlacke (102) kühlen sich ab. Hierbei wird auch der Ofenwiderstand (elektrischer Badwiderstand + Lichtbogenwiderstand) instabiler. Entsprechend schwankt der elektrische Leistungseintrag und der elektrische Energieeintrag (W elektr.). Die im Ofengefäß (101) gespeicherte Energie $W_g$ nimmt ab.

Schlimmer noch ist es, wenn die eingebrachte Energie im Verhältnis zur eingebrachten Materialmenge zu groß ist. Die im Ofengefäß (101) gespeicherte Energie $W_g$, wie auch Schlacken- und Metalltemperatur steigen relativ schnell an, die Energieeffizienz sinkt und es kann zu Schäden am Ofengefäß (101) kommen. Als Gegenmaßnahme muss die Leistungseinbringung reduziert oder gar unterbrochen werden. Im Gegensatz zur relativ schnell ansteigenden Schlacken- und Metalltemperatur kann es Tage dauern, bis sich wieder eine Soll-Temperatur eingestellt hat. In Folge sinkt die Produktionsmenge.

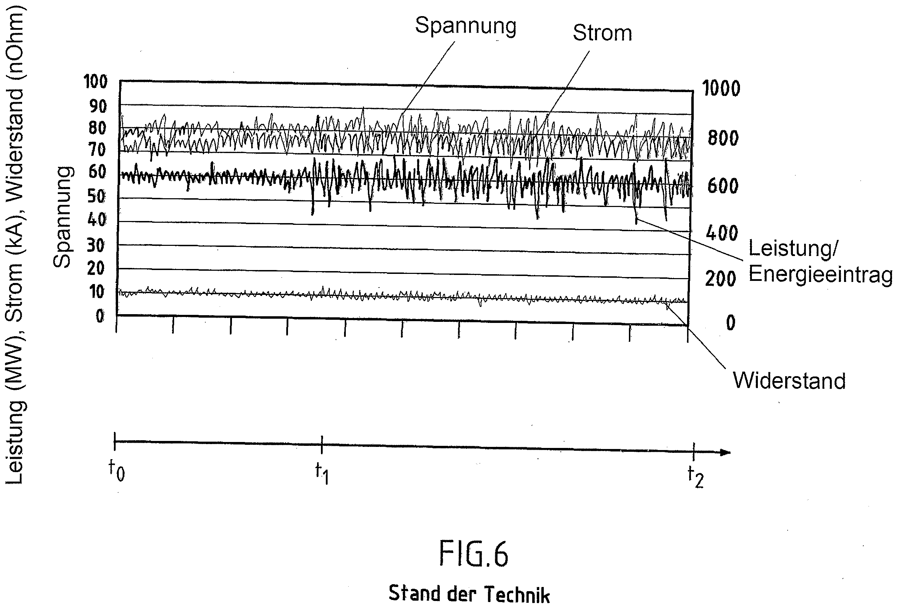

Fig. 6 zeigt einen beispielhaften zeitlichen Verlauf einer bekannten Leistungsmessung, einer bekannten Spanungsmessung (206) und einer Strommessung (205) eines Gleichstrom-Lichtbogenofens. Zum Zeitpunkt $t_1$ gibt es eine Änderung in der Materialzuführung, die unmittelbar zu einer Instabilität in der Leistungseinbringung führt (Zeitpunkt $t_1$

bis $t_2$). In den seltensten Fällen sind diese Unregelmäßigkeiten überhaupt durch den Bediener erkennbar, sie fallen in der Regel erst nach einer umfangreichen Analyse durch einen erfahrenen Metallurgen auf.

Moderne Einrichtungen werden hierbei immer größer und leistungsstärker, um die Wirtschaftlichkeit beim Betrieb dieser Anlagen zu steigern. Mit größer werdenden Einrichtungen wird es immer wichtiger die Energie- und Materialbilanz zu kennen und insbesondere das Verhältnis von eingebrachter Materialmenge zu eingebrachter Energie möglichst genau steuern zu können, sowie auf Abweichungen von Materialparametern oder Prozesswerten reagieren zu können. Korrekturmaßnahmen sind schwierig durchzuführen und bedürfen besserer Kontrollmöglichkeiten über den metallurgischen Ofenprozess und Vereinfachungen bei der Bedienung und Beobachtung.

Elektrolichtbogenöfen werden derzeit in unterschiedlichen Ausführungen und mit unterschiedlichen Steuerungen für die Leistungsregelung oder den Materialeintrag hergestellt und betrieben.

Bei den meisten bekannten wechselstrombetrieben oder gleichstrombetriebenen Lichtbogenöfen, wird die elektrische Energie von einer Wechselstromversorgungsleitung mittels höhenverstellbarer Elektroden in den Ofen eingebracht. Die elektrische Energie wird hierbei in Form von Lichtbögen und Widerstandserwärmung (Joule-Effekt) in thermische Energie umgewandelt, die das eingebrachte Material erwärmt.

Die europäische Patentanmeldung EP 2 910 085 beschreibt eine Vorrichtung und ein Verfahren zur prozessgeführten Leistungsregelung eines Lichtbogenofens. Die Vorrichtung umfasst, mehrere Sensortypen (thermisch, Körperschall, Strahlung) zur Erfassung aktueller Betriebsparameter in Abhängigkeit von der Zeit, eine Steuer- und Regeleinheit sowie mindestens einen Ofentransformator mit mindestens einem Laststufenschalter, der primärseitig die Wicklungsanzapfungen der Primärseite des Ofentransformators schaltet.

Die internationale Anmeldung WO 2007/048502 A1 betrifft eine Steuervorrichtung für Wechselstrom-Reduktionsöfen mit Elektroden, die einen Transformator und ein Regelsystem für den gesteuerten Energieeintrag in die Wechselstrom-Reduktionsöfen aufweist, wobei die Steuervorrichtung weiterhin steuerbare leistungselektronische Wechselstromschalter aufweist, die sekundärseitig in die Hochstromleiter geschaltet sind. Die Steuervorrichtung ist derart ausgebildet, dass kurze Schwankungen der elektrischen Parameter nur durch die Wechselstromschalter ausgeglichen werden.

Das europäische Patent EP 1 360 876 B1 beschreibt ein Leistungssteuersystem für einen wechselstrombetriebenen elektrischen Lichtbogenofen, umfassend einen variablen Blindwiderstand und eine variable Reaktor-Steuerung zum Auslösen einer Änderung des variablen Blindwiderstands, dadurch gekennzeichnet, dass die variable Reaktor-Steuerung geeignet ist, eine Impedanz der Elektrode zu überwachen und eine Änderung des variablen Blindwiderstands in Abhängigkeit von Änderungen in der überwachten Impedanz der Elektrode auszulösen, um Schwankungen in der Einbringung von Wirkleistung in die Elektrode zu reduzieren.

Die europäische Patentanmeldung EP 1 985 952 B2 beschreibt ein Verfahren zur Steuerung der Metallzuführung in einen Lichtbogenofen, wobei ein Bedeckungsindex des elektrischen Bogens durch Schlacke bestimmt wird. Es wird die Geschwindigkeit der Metallzuführung erhöht, beibehalten oder verringert.

Aus dem Stand der Technik sind beispielsweise die folgenden elektrischen Komponenten für eine Steuerung des Leistungseintrages in einen Lichtbogenofen wahlweise oder in einer sich ergänzenden Kombination bekannt:

- Ofentransformatoren mit integrierten Stufenschaltern, durch die der Energieeintrag stufig eingestellt werden kann;
- sekundärseitige leistungselektronische Wechselstromschalter oder steuerbare Gleichrichter über die eine hinreichende stufenlose Leistungsregelung möglich ist;
- variable Drosselspulen, die mittels parallelgeschalteter Thyristorschalter die Reaktanz verändern können und so den Leistungseintrag in den Ofen stabilisieren.

Über eine Höhenpositionsverstellung der Elektroden kann weiterhin Einfluss auf elektrische und metallurgische Parameter genommen werden, wie Lichtbogenlänge, Lichtbogenimpedanz bzw. die Strahlungsenergie.

Weiterhin sind aus dem Stand der Technik mechanische Einrichtungen zur Einbringung des Materialeintrages bekannt sowie Steuerungen zum Materialeintrag.

Die Einbringung von Materialien kann zum Beispiel batchweise über Schrottkörbe bzw. über Chargier-Einrichtungen erfolgen, oder kontinuierlich über Fördereinrichtungen. Die Steuerung des Materialeintrages erfolgt hierbei bekanntermaßen manuell durch den Bediener, in Abhängigkeit des Füllstandes im Ofen oder in Abhängigkeit eines "Bedeckungsindex" des elektrischen Lichtbogens mit Schlacke oder einfach nur in Abhängigkeit der Zeit, durch die Vorgabe eines Sollwertes durch den Bediener.

Selbst wenn bei bekannten Systemen sowohl kontinuierliche Material-Fördereinrichtungen und leistungselektronische Einrichtungen zum Eintragen von elektrischer Energie in den Ofen, wie Wechselstromschalter oder steuerbare Gleichrichter (primärseitig oder sekundärseitig des Ofentransformators) vorhanden sind, besteht bei den bekannten Vorrichtungen und Verfahren das Problem, auf Störungen im Fördersystem oder auf Abweichungen vom jeweiligen Sollwert bzw. auf größere Ungenauigkeiten bei der Materialbeschickung nicht ausreichend reagieren zu können. Auch kleinere Abweichungen im elektrischen Leistungseintrag verändern nachhaltig die Energiebilanz. Als Folge hiervon kann der metallurgische Prozess aus dem Gleichgewicht geraten und die Metall- und Schlackentemperatur kann von einer jeweiligen Solltemperatur abweichen. Im schlimmsten Fall können sogar kritische Temperaturen auftreten, die zu Verschleiß oder Schäden am Ofengefäß führen können. Der metallurgische Produktionsprozess kommt ins Stocken, die Produktionsmenge und die Energieeffizienz sinken.

Schließlich offenbart die europäische Patentschrift EP 1 872 074 B1 ein Verfahren zum Messen und Steuern einer Metall- bzw. Schrottzufuhr in einen elektrischen Lichtbogenofen. Dabei wird der Materialzufluss in den Elektrolichtbogenofen dadurch optimiert, dass die Geschwindigkeit der Materialzufuhr gemäß der in den Ofen gelieferten elektrischen Energie erfolgt.

Die in der EP 1 872 074 B1 angegebene technische Lehre hat jedoch den Nachteil, dass das Gewicht des eingetragenen Materials im Verhältnis zum gemessenen Gewicht des gesamten Ofenmantels, seiner Inhalte und jeglicher anderer Komponenten, welches mehrere 100 Tonnen betragen kann, relativ klein ist. Dies hat zur Folge, dass eine für alle diese Massen verwendete Wiegevorrichtung größere Messfehler aufweisen kann. Darüber hinaus erfolgt nachteiligerweise keine Anpassung des Eintrags der elektrischen Energie im Falle von Störungen oder bei größeren Ungenauigkeiten bei der Materialzufuhr; im Gegenteil wird ausdrücklich an dem vollen elektrischen Energieeintrag in den Ofen festgehalten.

Eine Anpassung des spezifischen Energiebedarfs oder eines erforderlichen Energieeintrags erfolgt nicht. Als Folge fallen Unregelmäßigkeiten bei der Energiebilanzierung zu spät auf. Die Metall- und Schlackentemperatur verliert deshalb leicht ihre Solltemperatur und kann soweit kritische Temperaturen annehmen, die zu einem Verschleiß am Ofengefäß führen können. Der metallurgische Produktionsprozess kommt ins Stocken, die Produktionsmenge und die Energieeffizienz sinken.

Die deutschen Patentanmeldungen oder Patente DE 10 2004 046728 A1, DE 35 43 773 A1, DE 15 33 922 B1 und DE 23 51 171 A offenbaren jeweils, zumindest ansatzweise, die Verfahrensschritte, wie sie im Oberbegriff des Patentanspruchs 1 beansprucht sind.

Ausgehend von diesem Stand der Technik, liegt der Erfindung die Aufgabe zugrunde, ein bekanntes Verfahren zum Betreiben eines Elektrolichtbogenofens, für einen Elektroreduktionsofen dahingehend weiterzubilden, dass die Produktionsmenge und die Energieeffizienz beim Betrieb des Elektrolichtbogenofens steigen.

Diese Aufgabe wird durch das in Patentanspruch 1 beanspruchte Verfahren gelöst. Dieses ist dadurch gekennzeichnet, dass der erforderliche elektrische Energieeintrag in den Elektroreduktionsofen unter anderem in Abhängigkeit eines Verlustparameters ermittelt wird, welcher die im Gefäß des Elektroreduktionsofens gespeicherte thermische Energie im Verhältnis zur Masse der Schlacke und zur Masse des aus dem Elektroreduktionsofens abgestochenen Materials (Schritt 404) repräsentiert.

Der Vorteil der Erfindung besteht zum einen darin, erkannt zu haben, dass die Steuerung einer optimalen Material-/Energiebilanz durch Variation des erforderlichen elektrischen Energieeintrags in den Elektrolichtbogenofen in Abhängigkeit des eingetragenen Massenstroms sich positiv auf den metallurgischen Prozess auswirkt, wodurch die Produktion und die Energieeffizienz erhöht werden können. Zum anderen liegt dem beanspruchten Vorgehen die Erkenntnis zugrunde, dass sich erforderlichenfalls der Energieeintrag bzw. der Leistungssollwert für den Elektrolichtbogenofen vorteilhafterweise deutlich genauer und zuverlässiger ändern lässt als der Materialeintrag in den Ofen.

Weitere vorteilhafte Ausgestaltungen der vorliegenden Erfindung sind Gegenstand der abhängigen Ansprüche.

Der Beschreibung sind 6 Figuren beigefügt, wobei

Figur 1    das erfindungsgemäße Verfahren zum Betreiben eines Elektrolichtbogenofens;
Figur 2    die Energiebilanz bei einem Elektrolichtbogenofen;
Figur 3    einen funktionalen Zusammenhang zwischen der dem Ofen zuzuführenden Energie bzw. Leistung und dem in den Ofen eingetragenen Massenstrom;
Figur 4    die Regelung der elektrischen Leistung gemäß der vorliegenden Erfindung;
Figur 5    ein Verfahren zum Betreiben eines Elektrolichtbogenofens aus dem Stand der Technik; und
Figur 6    die Auswirkungen eines Materialeintrags in den Elektrolichtbogenofen auf den Verlauf der elektrischen Energie im Stand der Technik veranschaulicht.

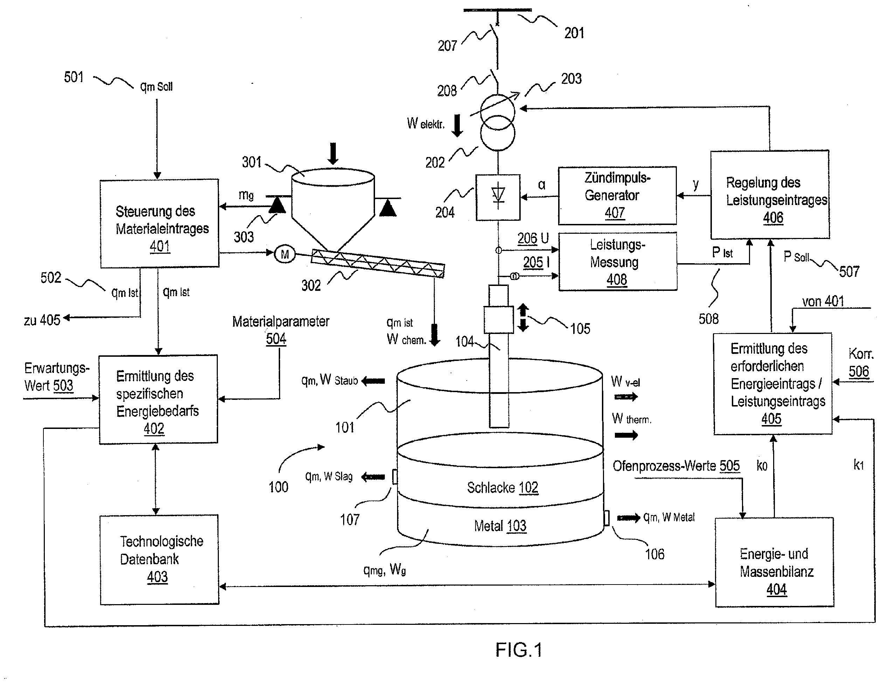

Die Erfindung wird nachfolgend unter Bezugnahme auf die genannten Figuren 1 bis 4 in Form von Ausführungsbeispielen detailliert erläutert.

Fig. 1 zeigt die Funktionsblöcke für die Steuerung bzw. Regelung des Material- und Energieeintrages gemäß der Erfindung in einen Elektrolichtbogenofen.

Der Bediener kann über eine Eingabemöglichkeit der Steuerung des Materialeintrages 401 einen Soll-Wert 501; $q_{m\,Soll}$ für den Materialeintrag bzw. den Massenfluss vorgeben. Entsprechend des gewünschten Materialeintrages wird mindestens eine Material-Fördereinrichtung betätigt und die tatsächlich eingebrachte Materialmenge über mindestens eine Gewichtserfassung 303 gemessen. In Abhängigkeit der Zeit berechnet der Funktionsblock 401 den tatsächlichen Materialeintrag 502; $q_{m\,Ist}$.

In einer vorteilhaften geschlossenen Regelung wird der gewünschte Materialeintrag (Sollwert) mit dem tatsächlichen Materialeintrag (Istwert) abgeglichen und die Differenz einem Regler zugeführt, der eine Stellgröße für die Material-Fördereinrichtung 302 so anpasst, dass die Regeldifferenz möglichst klein wird.

Der Funktionsblock 402 ermittelt anhand von gemessenen oder eingegebenen Materialparametern 504 den spezifischen Energiebedarf für den Ofen 100. Diese Materialparameter können z.B. die Zusammensetzung und Analyse der Einsatzmaterialien sein, Informationen zur Vorreduktion, Temperatur, Feuchtegehalt oder sonstige für die Ermittlung des spezifischen Energiebedarfs sinnvolle Werte. Weiterhin kann ein Erwartungswert 503 vorgegeben und bei der Ermittlung des spezifischen Energiebedarfs berücksichtigt werden. Der spezifische Energiebedarf kann mit historischen Daten aus einer technologischen Datenbank (403) verglichen und ggf. durch ein Prozessmodel mitlaufend angepasst werden. Im Ergebnis übergibt der Funktionsblock 402 einen Koeffizienten $k_1$, welcher den spezifischen Energiebedarf repräsentiert, an die nachfolgenden Steuerungsschritte. Der Koeffizienten $k_1$ wird hierbei vorzugsweise zyklisch neu berechnet.

Falls z.B. bereits vorreduziertes Material in den Reduktionsofen eingebracht wird, reduziert sich der Koeffizient $k_1$ entsprechend den Materialeigenschaften. Hierbei sinkt der spezifische Energiebedarf und die Energieeffizienz steigt.

Im Funktionsblock Energie- und Massenbilanz 404 werden im Wesentlichen die im Ofengefäß 101 gespeicherte thermische Energie aus Temperatur und Masse der enthaltenen Schlacke 102 und des enthaltenen Metalls 103 ermittelt, sowie die elektrischen- $W_{v-el}$ und thermischen Verluste $W_{therm}$ berechnet. Hierzu erhält der Funktionsblock 404 alle erforderlichen und sinnvollen Ofenprozess-Werte 505, sinnvolle Annahmen, sowie historische Daten aus der technologischen Datenbank 403.

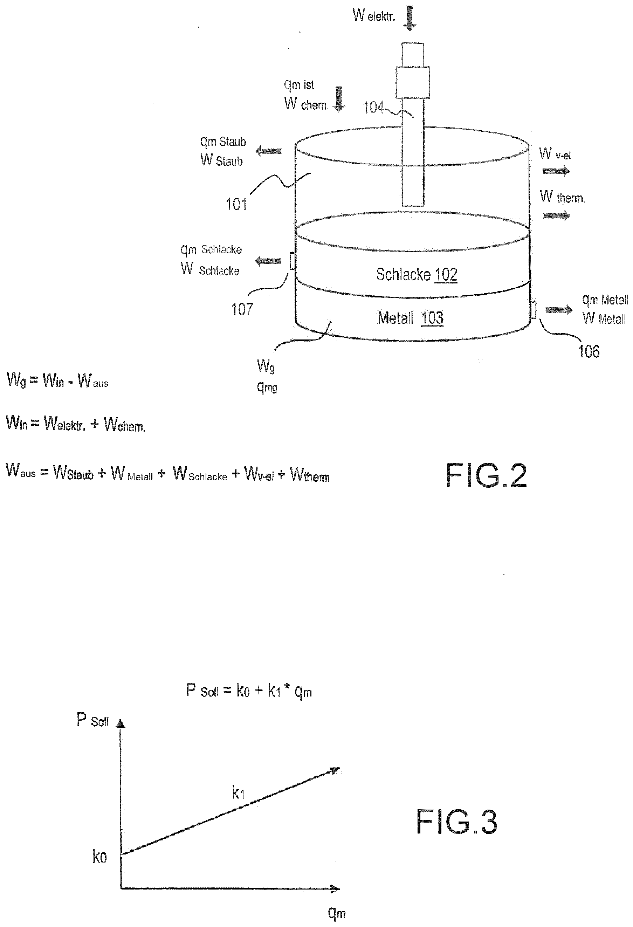

Fig. 2 veranschaulicht die Arbeitsweise des Funktionsblocks Energie und Massenbilanz 404 genauer.

Die dem Ofengefäß 101 zugeführte Energie ergibt sich aus der Summe der elektrischen Energie $W_{elektr.}$ und der mit den Einsatzmaterialien zugeführten chemischen Energie $W_{chem}$.

$$W_{in} = W_{elektr.} + W_{chem} \qquad (2)$$

Die aus dem Ofengefäß abgeführte Energie ergibt sich zum einen aus der mit dem heißen Abgas abgeführten thermische Energie $W_{abgas}$, den elektrischen- $W_{v-el}$ und thermischen Verlusten $W_{therm}$, sowie aus der mit der heißen Schlacke $W_{Slag}$ und dem heißen Metall $W_{Metal}$ abgeführten Energie:

$$W_{out} = W_{Abgas} + W_{Metal} + W_{Slag} + W_{v-el} + W_{therm} \qquad (3)$$

Die thermischen Energieverluste sind hierbei im Wesentlichen repräsentiert durch Temperaturverluste an Kühlwasser und Kühlluft, sowie sonstige Temperaturverluste an die Umgebung. Die Differenz aus der zugeführten und abgeführten Energie ist ein Maß für die im Ofengefäß 101 gespeicherte thermische Energie $W_g$.

$$W_g = W_{in} - W_{out} \qquad (4)$$

Die gespeicherte thermische Energie $W_g$ unterteilt sich hierbei im Wesentlichen in die Energie des flüssigen Metalls und der Schlacke.

Die im Ofengefäß 101 enthaltene Masse aus Schlacke 102 und Metal 103 erhöht sich durch den dem Ofengefäß zugeführten Materialeintrag $q_{m\,Ist}$ und reduziert sich durch das abgestochene Metal $q_{m\,Metal}$ und die abgestochene Schlacke $q_{m\,Slag}$. Weiterhin reduziert sich die Masse in geringem Umfang durch Staubverluste $q_{m\,Staub}$.

$$q_{m\,in} = q_{m\,ist} \qquad (5)$$

$$q_{m\,out} = q_{m\,Metal} + q_{m\,Slag} + q_{m\,Staub} \qquad (6)$$

$$q_{mg} = q_{m\,in} - q_{m\,out} \qquad (7)$$

Wieder Bezugnehmend auf Figur 1:
Die Ergebnisse einer diskontinuierlichen oder kontinuierlichen Messung der Metall- und/oder Schlackentemperatur, des Badlevels und/oder der Ofentemperatur, sowie sonstiger sinnvoller Prozess-Messungen können zur Korrektur der mitlaufenden Berechnung der Energie- und Massenbilanz 404 zusätzlich herangezogen werden. Die Aufgabe des Funktionsblockes 404 ist es zum einen dem Bediener diese Daten zur Beobachtung des Prozesses zur Verfügung zu stellen und zum anderen die im Ofen gespeicherte Energie $W_g$ im Verhältnis zur Masse der Schlacke $q_{m\,Slag}$ und des Metalls $q_{m\,Metal}$ in Balance zu halten. Hierzu berechnet der Funktionsblock (404) einen Koeffizienten $k_0$ für den Funktionsblock 405. Der Koeffizienten $k_0$ wird hierbei zyklisch neu berechnet.

Eine gute online Visualisierung der Material-/Energiebilanz auf einem Kontrollmonitor verbessert die Prozesskontrolle, erhöht das Verständnis für den metallurgischen Prozess und vereinfacht die Bedienung. Dies kann z.B. in Form von Sankey-Diagrammen oder ähnlichen Diagrammen oder Tabellen erfolgen.

Falls die Wärmeverluste aus verschiedenen Gründen abnehmen, reduziert sich der Koeffizient $k_0$ entsprechend. Der Energieverbrauch sinkt und die Energieeffizienz steigt.

Der Funktionsblock 405 ermittelt aus dem zugeführten Materialeintrag $q_{m\,Ist}$, dem Koeffizienten $k_0$ und dem Koeffizienten $k_1$ entsprechend einer im Funktionsblock hinterlegten Kurve/Tabelle bzw. mathematischen Funktion einen Leistungssollwert $P_{Soll}$; 507. Fig. 3 zeigt beispielhaft eine solche mögliche Kurve bzw. eine mathematische Funktion erster Ordnung.

$$P = k_0 + k_1 * q_m \qquad (8)$$

Je nach Ausführung und metallurgischem Prozess sind Abweichungen dieser Funktion denkbar.

In einer vorteilhaften Ausführung werden die Koeffizienten $k_0$ und $k_1$ von der Steuerung / dem Prozessmodel kontinuierlich bzw. zyklisch angefasst und optimiert, in Abhängigkeit von auftretenden Interaktionen.

Über eine Bedienerschnittstelle hat der Bediener die Möglichkeit manuell in die automatische Berechnung der Werte einzugreifen und diese wenn erforderlich zu korrigieren. Auch ist es denkbar für unterschiedliche Arbeitspunkte des Prozesses unterschiedliche Koeffizienten in einer elektronischen Tabelle bzw. innerhalb der Datenbank zu hinterlegen.

Der Funktionsblock der Leistungsmessung (408) ermittelt aus der Strommessung (205) und der Spannungsmessung (206) die Ist-Leistung pro Elektrode bzw. pro Elektrodenpärchen, mittels der mathematischen Beziehung

$$P = U * I * \cos \Phi \qquad (9)$$

Wobei der Leistungsfaktor $\cos \Phi$ der Phasenverschiebung zwischen Strom und Spannung entspricht. Je nach Prozess und Anordnung der Messgeräte (205; 206), kann zur Vereinfachung die Annahme $\cos \Phi = 1$ getroffen werden. Dadurch vereinfacht sich die Beziehung zu

$$P = U * I \qquad (10)$$

Der Funktionsbaustein 406 dient der Regelung des Leistungseintrages. Innerhalb des Bausteins erfolgt zunächst eine Berechnung der Regelabweichung aus der Differenz von Soll-Leistung ($P_{Soll}$) zu Ist-Leistung der jeweiligen Elektroden. In Abhängigkeit der Regelabweichung wird in einem Regler die Stellgröße (y) für den nachfolgenden Zünddimpuls-Generator (407), entsprechend einer in dem Regler hinterlegten Regler-Kennlinie bzw. eines elektronischen Berechnungs-Verfahrens ermittelt. Dieser verstellt dann den Zündwinkel ($\alpha$) für die Ansteuerung mindestens eines Stromrichters. Hierdurch wird die Ausgangs-Spannung des Stromrichters (204) solange verstellt, bis die Ist-Leistung der Soll-Leistung entspricht. Bei einem Unter- bzw. Überschreiten von Grenzwerten kann zusätzlich der Stufenschalter (203) des Ofentransformators (202) erhöht bzw. verringert werden. Auch ist es denkbar in einer weniger vorteilhaften aber preiswerteren alternativen Ausführungsform auf den Stromrichter (204) zu verzichten und nur den Stufenschalter (203) zur Leistungsregelung zu verwenden. Zur automatischen Korrektur einer verbleibenden Regeldifferenz kann der Istwert der Leistung $P_{Ist}$ (als Bestandteil der Ofenprozess-Werte 505) dem Funktionsblock der Energie- und Massenbilanz (404) zurückgeführt und - wenn erforderlich - der Koeffizient $k_0$ im nächsten Zyklus angepasst werden.

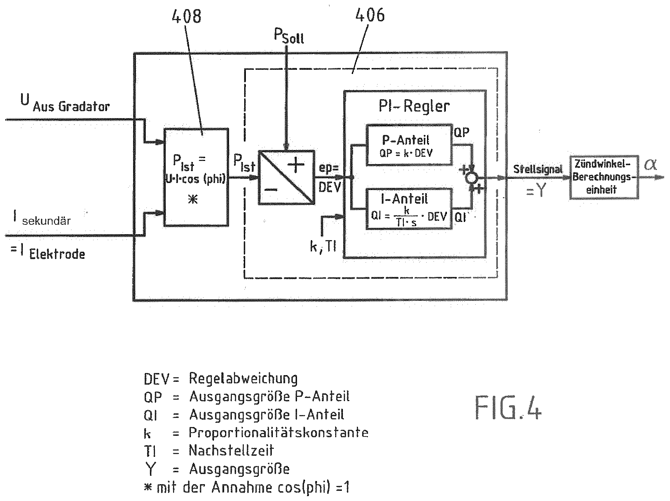

Fig. 4 zeigt eine mögliche vorteilhafte Ausführungsform eines Leistungsregelkreises mittels eines Proportional-Integral-Reglers (PI-Regler).

Neben der Ansteuerung des Stromrichters (204) mittels einer Zündwinkelberechnung und dem Phasenanschnitt von Leistungshalbleitern ist auch eine Pulsweiten-modulation, eine Chopper-Steuerung, bzw. Impuls-Steuerung oder eine vergleichbare Technologie zur Steuerung des Energieeintrags in den Elektrolichtbogenofen möglich.

Bezugszeichenliste

| | |
|---|---|
| 100 | Lichtbogenofen |
| 101 | Ofengefäß |
| 102 | Schlacke |
| 103 | Metall |
| 104 | Elektrode |
| 105 | Elektrodenpositions-Verstellung |
| 106 | Metallabstich |
| 107 | Schlackenabstich |

| | |
|---|---|
| 201 | Energieversorgungsschiene |
| 202 | Ofentransformator |
| 203 | Stufenschalter |
| 204 | Stromrichter |
| 205 | Strommessung |
| 206 | Spannungsmessung |
| 207 | Leistungsschalter |
| 208 | Trennschalter |

| | |
|---|---|
| 301 | Ofenbunker |
| 302 | Mataerial-Fördereinrichtung |
| 303 | Gewichtserfassung |

| | |
|---|---|
| 401 | Steuerung des Materialeintrages |
| 402 | Ermittlung des spezifischen Energiebedarfs |
| 403 | Technologische Datenbank |
| 404 | Energie- und Massenbilanz |
| 405 | Ermittlung des erforderlichen Energieeintrags |
| 406 | Leistungsregelung |
| 407 | Zündimpuls-Generator |
| 408 | Leistungsmessung |

| | |
|---|---|
| 501 | Materialeintrag (Sollwert) |
| 502 | Materialeintrag (Istwert) |
| 503 | Erwartungswert des spezifischen Energieverbrauches |
| 504 | Materialparameter |
| 505 | Ofenprozesswerte |
| 506 | Korrekturwerte |
| 507 | Ofenleistung (Sollwert) |
| 508 | Ofenleistung (Istwert) |

| | |
|---|---|
| $W_{elektr.}$ | elektrische Energie |
| $W_{chem}$ | chemische Energie |
| $W_{in}$ | zugeführte Energie |
| $W_{g}$ | gespeicherte Energie |
| $W_{aus}$ | abgeführte Energie |
| $W_{staub}$ | Energie des abgeführten Abgases |
| $W_{v-el}$ | elektrische Verluste |
| $W_{therm}$ | thermische Verluste |
| $W_{Schlacke}$ | Energie der ausgetragenen Schlacke |
| $W_{Metall}$ | Energie des ausgetragenen Metalls |
| $q_{m\,Soll}$ | gewünschter Materialeintrag (Sollwert) |
| $q_{m\,Ist}$ | tatsächlicher Materialeintrag (Ist) |
| $q_{m\,Metall}$ | abgestochenes Metall |
| $q_{m\,Schlacke}$ | abgestochene Schlacke |

| $q_{m\,Staub}$ | Staubverluste |
|---|---|
| $q_{mg}$ | gespeichertes Material |
| $q_{m\,in}$ | zugeführtes Material |
| $q_{m\,aus}$ | abgeführtes Material |
| $k_0$ | Koeffizient 0 |
| $k_1$ | Koeffizient 1 |
| $P_{Soll}$ | Leistung (Sollwert) |
| Pist | Leistung (Istwert) |
| $\cos \varphi$ | Leistungsfaktor |
| $\alpha$ | Zündwinkel |
| $\gamma$ | Stellgröße |

**Patentansprüche**

1. Verfahren zum Betreiben eines Elektrolichtbogenofens (100) mit mindestens einer Elektrode (104), aufweisend folgende Schritte:

   Eintragen von Material in Form eines Ist-Massenstromes in den Elektrolichtbogenofen; und
   Zuführen von elektrischer Energie über die mindestens eine Elektrode in den Elektrolichtbogenofen zum Aufschmelzen des eingetragenen Materials nach Maßgabe eines zuvor ermittelten erforderlichen elektrischen Energieeintrags;
   wobei der erforderliche elektrische Energieeintrag in den Elektrolichtbogenofen in Abhängigkeit des in den Ofen eingetragenen Massenstromes $q_{mlst}$ ermittelt wird (Schritt 405);
   wobei der erforderliche Energieeintrag in Form eines Leistungssollwertes $P_{Soll}$ ermittelt und entweder im Rahmen einer Leistungssteuerung oder einer Leistungsregelung in den Elektrolichtbogenofen eingebracht wird; und
   wobei der Schritt des Ermittelns des erforderlichen Energieeintrags (Schritt 405) weiterhin folgende Teilschritte aufweist:

   Vorgeben oder Ermitteln eines spezifischen Energiebedarfs (Schritt 402) in Form eines Energiebedarfs-Parameters $k_1$, wobei das Ermitteln erfolgt in Abhängigkeit eines vorgegebenen Energie-Erwartungswertes zum Betrieb des Elektrolichtbogenofens (100), des in den Elektrolichtbogenofen eingetragenen Massenstromes $q_{mlst}$ und/oder in Abhängigkeit von Eigenschaften des eingetragenen Materials;
   **dadurch gekennzeichnet,**
   **dass** es sich bei dem Elektrolichtbogenofen um einen Elektroreduktionsofen handelt zum Aufschmelzen und Reduzieren des eingetragenen Materials;
   **dass** das Zuführen von elektrischer Energie über die mindestens eine Elektrode in den Elektroreduktionsofen erfolgt; und
   **dass** der Schritt des Ermittelns des erforderlichen Energieeintrags (Schritt 405) weiterhin folgende Teilschritte aufweist:

   Vorgeben oder Ermitteln der im Gefäß des Elektroreduktionsofens gespeicherten thermischen Energie im Verhältnis zur Masse der Schlacke und zur Masse des aus dem Elektroreduktionsofen abgestochenen Materials (Schritt 404) in Form eines Verlust-Parameters ko; und
   Ermitteln des erforderlichen elektrischen Energieeintrags (Schritt 405) in Form $_{des}$ Leistungssollwertes $P_{Soll}$ für den Elektroreduktionsofen (100) in Abhängigkeit des in den Elektroreduktionsofen eingetragenen Massenstromes $q_{mlst}$, des Energiebedarfs-Parameters $k_1$ und des Verlust-Parameters $k_0$.

2. Verfahren nach Anspruch 1, **dadurch gekennzeichnet,**
   **dass** es sich bei den bei der Ermittlung des spezifischen Energiebedarfs (Schritt 402) berücksichtigten Eigenschaften des in den Elektrolichtbogenofen eingetragenen Materials beispielhaft um mindestens eine der folgende Eigenschaften handelt: die chemische Zusammensetzung, die Temperatur und/oder den Feuchtegehalt des eingetragenen Materials und/oder ob das eingetragene Material zuvor bereits einer Vorreduktion unterzogen wurde.

3. Verfahren nach Anspruch 1 oder 2, **dadurch gekennzeichnet, dass** die Ermittlung des erforderlichen elektrischen Energieeintrags $P_{Soll}$ (Schritt 405) mit Hilfe eines vorgegebenen funktionalen Zusammenhangs zwischen dem Leistungssollwert und den Parametern $q_{mlst}$, $k_0$ und $k_1$, sowie optional auch einem Korrekturfaktor $k_2$ erfolgt.

4. Verfahren nach Anspruch 3, **dadurch gekennzeichnet, dass** sich der funktionale Zusammenhang beispielsweise wie folgt darstellt:

$$P_{Soll} = (k_0 + k_1 \cdot q_{mIst}) \cdot k_2$$

5. Verfahren nach einem der Ansprüche 1 bis 4,
**dadurch gekennzeichnet,**
**dass** die Ermittlung des erforderlichen elektrischen Energieeintrags $P_{Soll}$ (Schritt 405) und zumindest einzelner der für seine Berechnung erforderlichen Parameter, wie der Massenstrom $q_{mIst}$, der spezifische Energiebedarf $k_1$ und/oder der Verlust-Parameter $k_1$, kontinuierlich während des Betriebs des Elektrolichtbogenofens erfolgt.

6. Verfahren nach einem der vorangegangenen Ansprüche 1 bis 5,
**dadurch gekennzeichnet,**
**dass** der Ist-Leistungseintrag in den Elektrolichtbogenofen in Rahmen der Leistungssteuerung auf den Leistungssollwert eingestellt oder im Rahmen der Leistungsregelung auf den Leistungssollwert geregelt wird, jeweils durch Variation des Zündwinkels eines Stromrichters (204) als Stellglied oder durch Variation der Einstellung des Stufenschalters (203) des Transformators (202) des Elektrolichtbogenofens (100) als Stellglied.

**Claims**

1. Method of operating an electric arc furnace (100) with at least one electrode (104), comprising the following steps:

   charging of material in the form of an actual mass flow into the electric arc furnace; and
   feeding of electrical energy by way of the at least one electrode into the electric arc furnace for melting the charged material in accordance with a previously determined required electrical energy intake;
   wherein the required electrical energy intake in the electric arc furnace is determined in dependence on the mass flow $q_{mIst}$ charged into the furnace (step 405);
   wherein the required energy intake is determined in the form of a power target value $P_{Soll}$ and is introduced into the electric arc furnace within the scope of either a power control or a power regulation; and
   wherein the step of determining the required energy intake (step 405) comprises the following sub-steps:

   presetting or determination of a specific energy need (step 402) in the form of an energy need parameter $k_1$, wherein the determination takes place in dependence on a predetermined energy expectation value for operation of the electric arc furnace (100), the mass flow $q_{mist}$ charged into the electric arc furnace and/or characteristics of the charged material;
   **characterised in that**
   the electric arc furnace is a submerged arc furnace for melting and reducing the charged material;
   the feed of electrical energy is carried out by way of the at least one electrode into the submerged arc furnace; and
   the step of determining the required energy intake (step 405) further comprises the following sub-steps:

   presetting or determination of the thermal energy, which is stored in the vessel of the submerged arc furnace, in relation to the mass of the slag and to the mass of the material tapped from the submerged arc furnace (step 404) in the form of a loss parameter $k_0$; and
   determination of the required electrical energy intake (step 405) in the form of the power target value $P_{Soll}$ for the submerged arc furnace (100) in dependence on the mass flow $q_{mist}$ charged into the submerged arc furnace, the energy need parameter $k_1$ and the loss parameter $k_0$.

2. Method according to claim 1, **characterised in that** the characteristics, which are taken into consideration in the determination of the specific energy need (step 402), of the material charged into the submerged arc furnace are, for example, at least one of the following characteristics: the chemical composition, the temperature and/or the moisture content of the charged material and/or whether the charged material was already subjected beforehand to a preliminary reduction.

3. Method according to claim 1 or 2, **characterised in that** the determination of the required electrical energy intake $P_{Soll}$ (step 405) is carried out with the help of a predetermined functional interrelationship of the power target value and the parameters $q_{-mist}$, $k_0$ and $k_1$ as well as optionally also a correction factor $k_2$.

4. Method according to claim 3, **characterised in that** functional interrelationship is, for example, represented as follows:

$$P_{Soll} = (k_0 + k_1 \, {}^*q_{mist})^*k_2$$

5. Method according to any one of claims 1 to 4, **characterised in that** the determination of the required electrical energy intake $P_{Soll}$ (step 405) and at least individual ones of the parameters required for its calculation, such as the mass flow $q_{mist}$, the specific energy need $k_1$ and/or the loss parameter $k_1$, is carried out continuously during operation of the electric arc furnace.

6. Method according to any one of the preceding claims 1 to 5, **characterised in that** the actual power intake into the submerged arc furnace is set within the scope of the power control to the power target value or is regulated within the scope of the power regulation to the power target value, in each instance through variation of the ignition angle of a power converter (204) as setting element or through variation of the setting of the tap changer (203) of the transformer (202) of the electric arc furnace (100) as setting element.

**Revendications**

1. Procédé destiné à l'exploitation d'un four électrique à arc (100) qui comprend au moins une électrode (104), qui présente les étapes suivantes dans lesquelles :

   on introduit une matière sous la forme d'un courant massique réel dans le four électrique à arc ; et
   on achemine de l'énergie électrique par l'intermédiaire de ladite au moins une électrode dans le four électrique à arc à des fins de mise en fusion de la matière qui a été introduite en conformité avec un apport d'énergie électrique requis qui a été déterminé au préalable ;
   dans lequel l'apport d'énergie électrique requis dans le four électrique à arc est déterminé en fonction du courant massique $q_{mist}$ qui a été introduit dans le four (étape 405) ;
   dans lequel l'apport d'énergie requis est déterminé sous la forme d'une valeur de consigne de puissance $P_{Soll}$ et est introduit, dans le cadre soit d'un contrôle de la puissance, soit d'un réglage de la puissance dans le four électrique à arc ; et
   dans lequel l'étape dans laquelle on détermine l'apport d'énergie requis (étape 405) présente en outre les étapes partielles indiquées ci-après dans lesquelles :

   on spécifie ou on détermine une demande spécifique en énergie (étape 402) sous la forme d'un paramètre de demande énergétique $k_1$ ; dans lequel la détermination a lieu en fonction d'une valeur de prévision d'énergie qui a été définie au préalable à des fins d'exploitation du four électrique à arc (100), du courant massique $q_{mist}$ qui a été introduit dans le four électrique à arc et/ou en fonction des propriétés de la matière qui a été introduite ;
   **caractérisé**
   **en ce que**, en ce qui concerne le four électrique à arc, il s'agit d'un four électrique du type à réduction qui est destiné à la mise en fusion et à la réduction de la matière qui a été introduite ;
   **en ce que** l'acheminement d'énergie électrique dans le four électrique du type à réduction a lieu par l'intermédiaire de ladite au moins une électrode ; et
   **en ce que** l'étape dans laquelle on détermine l'apport d'énergie requis (étape 405) présente en outre les étapes partielles indiquées ci-après dans lesquelles :

   on spécifie ou on détermine l'énergie thermique emmagasinée dans la cuve du four électrique du type à réduction par rapport à la masse du laitier et par rapport à la masse de la matière qui a été obtenue par coulée à partir du four électrique du type à réduction (étape 404) sous la forme d'un paramètre de perte $k_0$ ; et
   on détermine l'apport d'énergie électrique requis (étape 405) sous la forme de la valeur de consigne de puissance $P_{Soll}$ pour le four électrique du type à réduction (100) en fonction du courant massique $q_{mist}$ qui a été introduit dans le four électrique du type à réduction, du paramètre de demande énergétique $k_1$ et du paramètre de perte $k_0$.

**2.** Procédé selon la revendication 1, **caractérisé en ce que**, en ce qui concerne les propriétés prises en compte au cours de la détermination de la demande spécifique en énergie (étape 402) de la matière qui a été introduite dans le four électrique à arc, il s'agit par exemple d'au moins une des propriétés indiquées ci-après, à savoir : la composition chimique, la température et/ou la teneur en humidité de la matière qui a été introduite et/ou le fait de savoir si la matière qui a été introduite a déjà été soumise auparavant à une réduction préalable.

**3.** Procédé selon la revendication 1 ou 2, **caractérisé en ce que** la détermination de l'apport d'énergie électrique requis $P_{Soll}$ (étape 405) a lieu à l'aide d'un rapport fonctionnel qui a été prédéfini entre la valeur de consigne de puissance et les paramètres $q_{mist}$, $k_0$ et $k_1$, et de manière facultative, également un facteur de correction $k_2$.

**4.** Procédé selon la revendication 3, **caractérisé en ce que** le rapport fonctionnel se présente par exemple comme suit :

$$P_{Soll} = (k_0 + k_1 * q_{mist}) * k_2.$$

**5.** Procédé selon l'une quelconque des revendications 1 à 4, **caractérisé en ce que** la détermination de l'apport d'énergie électrique requis $P_{Soll}$ (étape 405) et d'au moins un certain nombre des paramètres requis pour son calcul, tels que le courant massique $q_{mist}$, la demande spécifique en énergie $k_1$ et/ou le paramètre de perte $k_0$, a lieu de manière continue au cours de l'exploitation du four électrique à arc.

**6.** Procédé selon l'une quelconque des revendications 1 à 5, **caractérisé en ce que** l'apport de puissance réel dans le four électrique à arc est mis au point à la valeur de consigne de puissance dans le cadre du contrôle de la puissance ou est réglé à la valeur de consigne de puissance dans le cadre du réglage de la puissance, respectivement par l'intermédiaire d'une variation de l'angle d'allumage d'un convertisseur de puissance (204) à titre d'élément de mise au point ou par l'intermédiaire d'une variation de la mise au point d'un commutateur pas à pas (203) du transformateur (202) du four électrique à arc (100) à titre d'élément de réglage.

FIG.1

W elektr. ⬇

qm ist
W chem. ⬇   104~

qm Staub ⬅
W Staub

W v-el ⟹

W therm. ⟹

101

qm Schlacke ⬅
W Schlacke

Schlacke 102

qm Metall ⟹
W Metall

107

Metall 103

106

$W_g$
$q_{mg}$

$W_g = W_{in} - W_{aus}$

$W_{in} = W_{elektr.} + W_{chem.}$

$W_{aus} = W_{Staub} + W_{Metall} + W_{Schlacke} + W_{v-el} + W_{therm}$

# FIG.2

$P_{Soll} = k_0 + k_1 * q_m$

$P_{Soll}$ ▲

$k_1$

# FIG.3

$k_0$

$q_m$

FIG.4

DEV = Regelabweichung
QP = Ausgangsgröße P-Anteil
QI = Ausgangsgröße I-Anteil
k = Proportionalitätskonstante
TI = Nachstellzeit
Y = Ausgangsgröße
* mit der Annahme cos(phi) =1

EP 3 858 108 B1

# FIG.5
## Stand der Technik

FIG.6
Stand der Technik

**EP 3 858 108 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2910085 A
- WO 2007048502 A1
- EP 1360876 B1
- EP 1985952 B2
- EP 1872074 B1

- DE 102004046728 A1
- DE 3543773 A1
- DE 1533922 B1
- DE 2351171 A